# EUROPÄISCHE PATENTSCHRIFT

(11) **EP 2 780 607 B1**
(45) Veröffentlichungstag und Bekanntmachung des Hinweises auf die Patenterteilung: **26.06.2019**
(21) Anmeldenummer: 12786950.1
(22) Anmeldetag: 08.11.2012
(51) Int. Cl.: F16F 9/05, F16F 9/04, B60G 11/62, B60G 17/052

(54) **LUFTFEDER**
AIR SPRING
RESSORT PNEUMATIQUE

(30) Priorität: 15.11.2011 DE 102011086353
(43) Veröffentlichungstag der Anmeldung: 24.09.2014
(73) Patentinhaber: Continental Teves AG & Co. OHG, 60488 Frankfurt am Main (DE)
(72) Erfinder: KRÖGER, Dirk, 30419 Hannover (DE)
(86) Internationale Anmeldenummer: PCT/EP2012/072094
(87) Internationale Veröffentlichungsnummer: WO 2013/072241

(56) Entgegenhaltungen:
- EP-A1- 1 614 928
- DE-A1- 19 908 607
- DE-C1- 19 508 980

## Beschreibung

Die Erfindung betrifft eine Luftfeder für Fahrzeuge mit einem zwischen einem Luftfederdeckel und einem Luftfederabrollkolben luftdicht eingespannten Luftfederbalg aus elastomerem Material, welcher mit dem Luftfederdeckel und dem Luftfederabrollkolben einen mit Druckluft gefüllten Arbeitsraum begrenzt und der unter Ausbildung einer Rollfalte am Luftfederabrollkolben abrollt und unter Ausbildung einer zweiten Falte am Luftfederdeckel befestigt ist, sowie mit einem Elastomerelement, welches als Anti-Rauhigkeitslager vorgesehen ist.

Luftfedern, die zwischen Fahrwerk und Fahrzeugkarosserie eingespannt sind und einen Luftfederbalg aufweisen, der wiederum zwischen einem Luftfederdeckel und einem Abrollkolben befestigt ist, sind in eine Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur des konzentrischen Luftfederkolbens/Abrollkolbens ab. Eine derartige Luftfeder wird häufig in Straßen- oder Schienenfahrzeugen eingesetzt, um eine komfortable Federung zu erreichen.

Zunehmend werden sogenannte "Anti-Harshnesslager" (Anti-Rauhigkeitslager) verlangt, um den Federkomfort der Luftfeder im Fahrzeug zu verbessern. Als Harshness wird ein überlagertes, raues und hartes Federungsverhalten bei Schwingungen höherer Frequenz und geringerer Amplitude verstanden, welches bei Luftfedern bzw. bei Luftfeder- und Dämpfereinheiten von dem anliegenden Arbeitsdruck sowie den Lagerungen zwischen den Bauteilen und der Fahrzeugkarosserie abhängig ist.

Eine Luftfeder mit Anti-Harshnesslager ist beispielsweise aus der DE 102010017227 A1 bekannt, wobei das Lager als Elastomerelement zwischen einem Deckelober- und einem Deckelunterteil vorgesehen ist.

Insbesondere bei modernen Fahrzeugen, bei welchen es aufgrund des vorhandenen geringen Bauraumes oft nötig ist, die Luftfeder ohne integrierte Dämpfer in Über-Kopf-Lage einzubauen, schränkt diese Anordnung den axialen Bauraum erheblich ein oder das Elastomerelement ist nicht optimal zum wirksamen Durchmesser der Luftfeder ausgerichtet.

Das Dokument EP 1 614 928 A1, welches als der nächstliegende Stand der Technik angesehen wird, offenbart die Merkmale des Oberbegriffs des Anspruchs 1.

Der Erfindung liegt daher die Aufgabe zugrunde, eine Luftfeder für Fahrzeuge bereitzustellen, welche einen optimierten Bauraum für eine freistehende Luftfeder insbesondere in Über-Kopf-Lage mit Anti-Harshnesslager zu optimieren. Zusätzlich soll die Wirksamkeit des Lagers bezüglich des Fahrkomforts optimiert werden.

Die Aufgaben werden erfindungsgemäß dadurch gelöst, dass das Elastomerelement zwischen einem ersten Kolbenteil und einem dazu koaxialen zweiten Kolbenteil des Luftfederabrollkolben angeordnet ist, wobei an dem ersten Kolbenteil die Abrollfläche für den Luftfederbalg vorgesehen und der Luftfederbalg mittels eines Klemmelements befestigt ist und wobei das zweite Kolbenteil an einer Montagefläche einer Fahrzeugkarosserie montierbar ist. Durch die Positionierung des Anti-Rauhigkeitslagers im Luftfederabrollkolben kann eine im Verglich zu bekannten Luftfedern in Über-Kopf-Lage wesentlich verkürzte axiale Bauhöhe der Luftfeder erzielt werden. Ferner erlaubt die Anordnung des Anti-Rauhigkeitslagers im Luftfederabrollkolben durch die Nähe zur Fahrzeugkarosserie eine direktere Komfort-Wirkung.

Das Elastomerelement als Anti-Rauhigkeitslager ist gemäß der Erfindung aus Gummi und zwischen den beiden Kolbenteilen vulkanisiert vorgesehen sein, wodurch eine einfache Herstellung erzielt wird.

Gemäß der Erfindung ist das erste Kolbenteil zweiteilig mit einem ersten und einem zweiten Bauteil ausgebildet, wobei das erste Bauteil zur Befestigung des Luftfederbalges vorgesehen und an dem zweiten Bauteil die Abrollfläche angeordnet ist. Vorteilhaft dabei ist, dass die Abrollkontur des Kolbens ausgetauscht werden kann, womit die Kennung der Luftfeder im Rahmen einer Fahrabstimmung geändert werden kann.

Vorzugsweise weist das zweite Bauteil einen radial nach innen gerichteten Absatz auf, welcher zur Befestigung auf dem ersten Bauteil in eine Ausnehmung auf einer Außenseite des ersten Bauteils eingreift, wodurch die Abrollkontur des Kolbens in einfacher Weise ausgetauscht werden kann.

Gemäß einer vorteilhaften Ausführungsform ist das Elastomerelement aus Gummi und zwischen zwei Ringelementen vulkanisiert vorgesehen, welche zwischen dem zweiten Kolbenteil und dem ersten Bauteil des ersten Kolbenteiles angeordnet sind.

Weist die Luftfeder wenigstens einen weiteren Arbeitsraum auf, welcher mittels einer Trennwand und eines Schaltventils von dem Arbeitsraum abgetrennt vorgesehen ist, kann gemäß einer vorteilhaften Ausführungsform der Erfindung das zweite Kolbenteil dreiteilig ausgebildet sein, wobei das Schaltventil zwischen einem ersten, als Trennwand vorgesehenen Bauteil und einem zweiten Bauteil angeordnet ist, welche abgedichtet miteinander verbunden sind, und wobei ein drittes Bauteil, welches mit dem zweiten Bauteil verbunden ist, zur Befestigung an der Montagefläche der Fahrzeugkarosserie vorgesehen ist.

Vorzugsweise können das erste und das zweite Bauteil mittels einer Gewindeverbindung miteinander abgedichtet verbunden sein.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor. Es zeigt jeweils stark schematisiert sowie im Schnitt:
- Figur 1: ein erstes Ausführungsbeispiel einer nicht erfindungsgemäßen Luftfeder in Über-Kopf-Lage;
- Figur 2: einen Luftfederabrollkolben der Luftfeder gemäß Fig. 1;
- Figur 3: einen Vergleich zwischen einer bekannten Luftfeder und der nicht erfindungsgemäßen Luftfeder gemäß Fig. 1 und 2 in Über-Kopf-Lage;
- Figur 4: einen Luftfederabrollkolben eines zweiten Ausführungsbeispiels einer erfindungsgemäßen Luftfeder und
- Figur 5: einen Luftfederabrollkolben eines dritten Ausführungsbeispiels einer nicht erfindungsgemäßen Luftfeder.

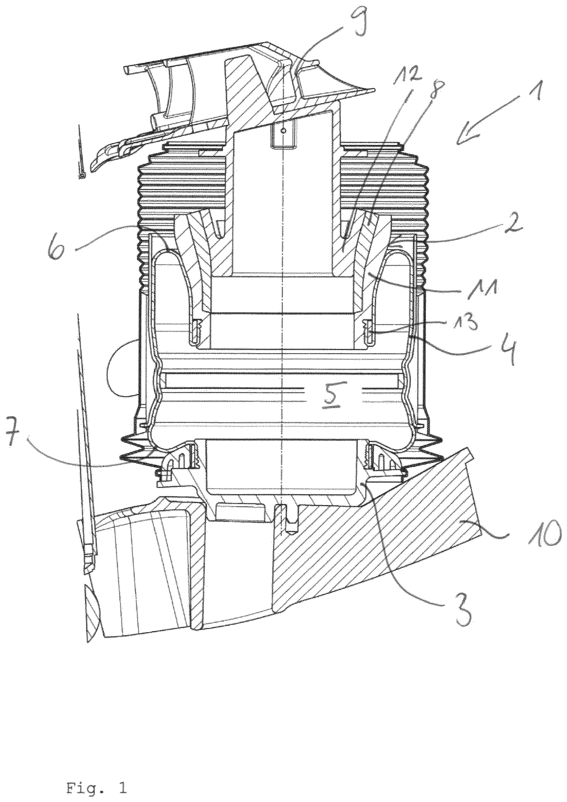

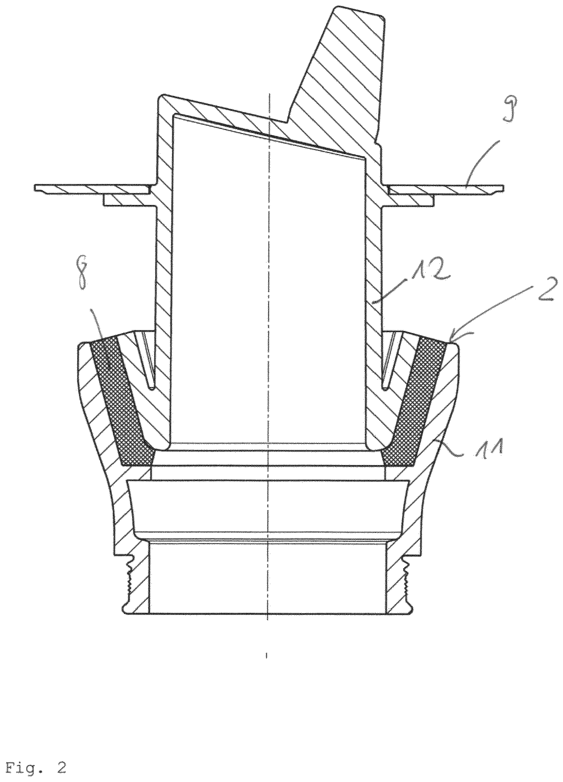

Die Fig.1 zeigt ein erstes Ausführungsbeispiel einer Luftfeder 1 in eingebautem Zustand in einem Fahrzeug, während Fig. 2 einen vergrößerten Luftfederabrollkolben 2 der in der Fig. 1 dargestellten Luftfeder 1 zeigt.

Zwischen einem Luftfederdeckel 3 und dem Luftfederabrollkolben 2 weist die Luftfeder 1 einen luftdicht eingespannten Luftfederbalg 4 aus elastomerem Material auf, welcher mit dem Luftfederdeckel 3 und dem Luftfederabrollkolben 2 einen mit Druckluft gefüllten Arbeitsraum 5 begrenzt. Der Luftfederbalg 4 rollt unter Ausbildung einer Rollfalte 6 am Luftfederabrollkolben 2 ab und ist unter Ausbildung einer zweiten Falte 7 am Luftfederdeckel 2 befestigt.

Als Anti-Rauhigkeitslager (Anti-Harshnesslager) ist ein Elastomerelement 8 vorgesehen, welches den Federkomfort der Luftfeder 1 im Fahrzeug verbessert. Als Harshness wird ein überlagertes, raues und hartes Federungsverhalten bei Schwingungen höherer Frequenz und geringerer Amplitude verstanden, welches bei Luftfedern bzw. bei Luftfeder- und Dämpfereinheiten von dem anliegenden Arbeitsdruck sowie den Lagerungen zwischen den Bauteilen und der Fahrzeugkarosserie abhängig ist.

So ist es bei modernen Fahrzeugen oft nötig, aufgrund des geringen vorhandenen Bauraumes eine Luftfeder ohne integrierten Dämpfer in der sogenannten Up-Side-Down-Lage (Über-Kopf-Lage) einzubauen, bei welcher sich der Luftfederabrollkolben an der Fahrzeugkarosserie 9 abstützt und der Luftfederdeckel unten auf z.B. einem Querlenker 10 einer Achse aufliegt. Diese Anordnung erlaubt einen verbesserten Ausgleich der Achskinematik, schränkt jedoch den axialen Bauraum erheblich ein oder ein Elastomerelement ist bei bekannten Luftfedern nicht optimal zum wirksamen Durchmesser der Luftfeder ausgerichtet.

Um den Bauraum sowie die Wirksamkeit des Anti-Rauhigkeitslagers bezüglich des Fahrkomforts der Luftfeder 1 zu optimieren, ist das Elastomerelement 8 zwischen einem ersten Kolbenteil 11 und einem dazu koaxialen zweiten Kolbenteil 12 des Luftfederabrollkolben 2 angeordnet. Das Elastomerelement 8 als Anti-Rauhigkeitslager ist bei diesem Ausführungsbeispiel aus Gummi vorgesehen und zwischen den beiden Kolbenteilen 11, 2 einvulkanisiert, was eine einfache Herstellung bedingt.

Dabei ist die Abrollfläche für den Luftfederbalg 4 an dem ersten Kolbenteil 11 vorgesehen und der Luftfederbalg 4 ist mittels eines Klemmelements 13 an dem ersten Kolbenteil 11 befestigt. Das zweite Kolbenteil 12 ist an einer Montagefläche der Fahrzeugkarosserie 9 montierbar.

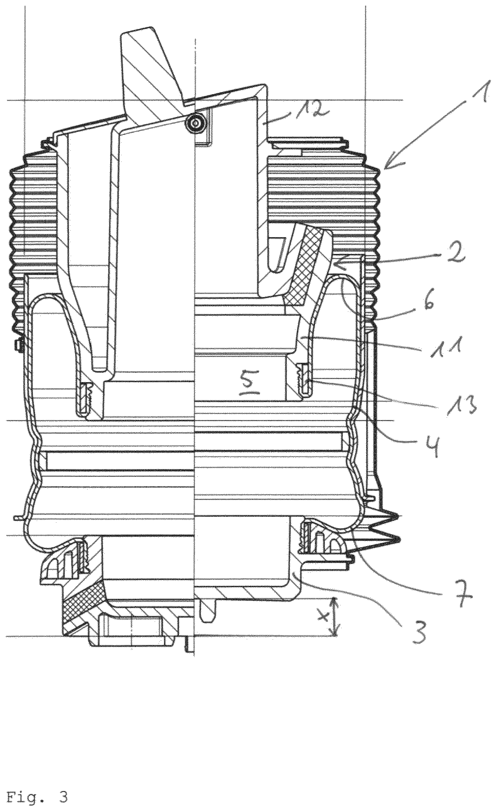

Fig. 3 zeigt einen Vergleich zwischen einer bekannten Luftfeder in der linken Hälfte und der nicht erfindungsgemäßen Luftfeder 1 in Über-Kopf-Lage in der rechten Hälfte. Hieraus wird deutlich ersichtlich, dass durch die Positionierung des Anti-Rauhigkeitslagers im Luftfederabrollkolben 2 eine Verkürzung der axialen Bauhöhe der Luftfeder 1 um einen Betrag x erzielt werden kann. Ferner erlaubt die Anordnung des Anti-Rauhigkeitslagers im Luftfederabrollkolben 2 aufgrund der näheren Positionierung zur Fahrzeugkarosserie 9 eine direktere Komfort-Wirkung.

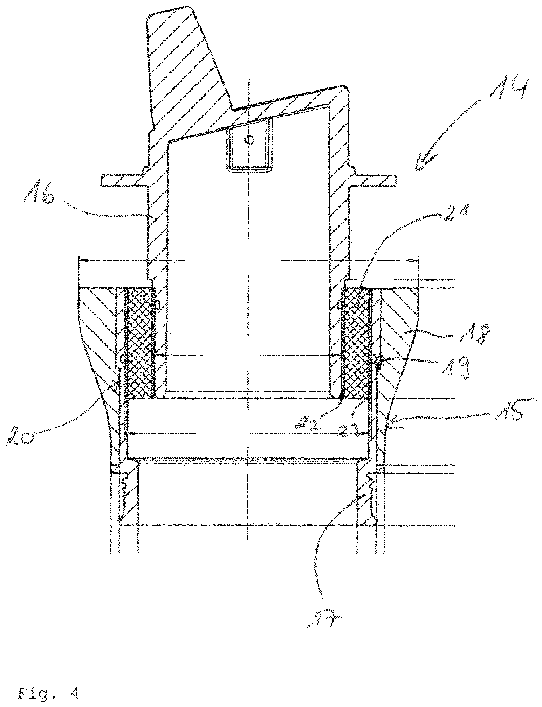

Fig. 4 ist ein Luftfederabrollkolben 14 eines zweiten Ausführungsbeispiels einer erfindungsgemäßen Luftfeder zu entnehmen. Ein erstes Kolbenteil 15 des Luftfederabrollkolbens 14 ist zweiteilig mit einem ersten und einem zweiten Bauteil 17, 18 ausgebildet. Das erste Bauteil 17 ist dabei zur Befestigung des Luftfederbalges 4 vorgesehen und an dem zweiten Bauteil 18 ist die Abrollfläche angeordnet.

Zur Befestigung auf dem ersten Bauteil 17 weist das zweite Bauteil 18 einen radial nach innen gerichteten Absatz 19 auf, welcher in eine Ausnehmung 20 auf einer Außenseite des ersten Bauteils 17 eingreift.

Weiter ist Fig. 4 zu entnehmen, dass das als Anti-Rauhigkeitslager (Anti-Harshnesslager) vorgesehene Elastomerelement 21 aus Gummi ausgebildet ist und zwischen zwei Ringelementen 22, 23 vulkanisiert ist, welche zwischen dem zweiten Kolbenteil 16 und dem ersten Bauteil 17 des ersten Kolbenteiles 15 angeordnet und in diese eingepresst sind.

Bei diesem Ausführungsbeispiel können sowohl das Anti-Rauhigkeitslager als die Abrollkontur des Luftfederabrollkolbens 14 in einfacher Weise ausgetauscht werden, wodurch die Kennung der Luftfeder im Rahmen einer Fahrabstimmung geändert werden kann.

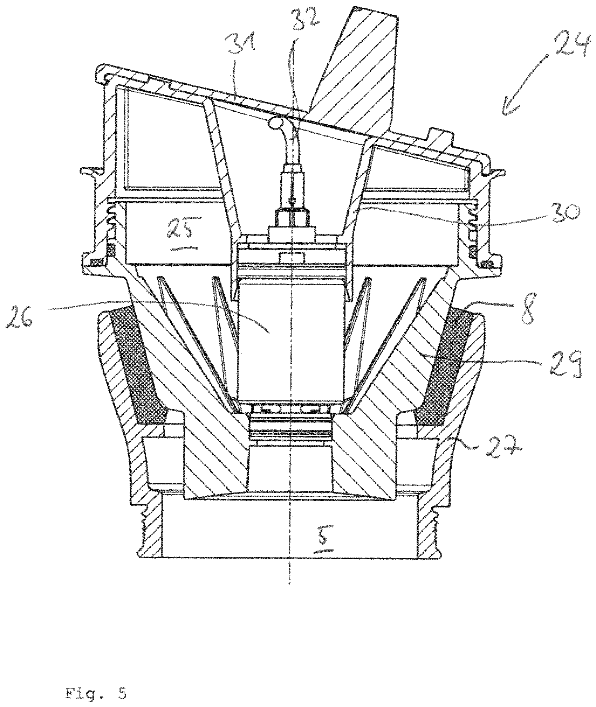

Um die Steifigkeit der Luftfeder zu verändern, kann die Luftfeder wenigstens einen weiteren Arbeitsraum 25 aufweisen, wie dies in Fig. 5, welche einen Luftfederabrollkolben 24 eines dritten Ausführungsbeispiels mit einem ersten und einem zweiten Kolbenteil 27,28 zeigt.

Der weitere Arbeitsraum 25 ist mittels einer Trennwand und eines Schaltventils 26 von dem Arbeitsraum 5 abgetrennt.

Das zweites Kolbenteil 28 ist dreiteilig ausgebildet, wobei das Schaltventil 26 zwischen einem ersten, als Trennwand vorgesehenen Bauteil 29 und einem zweiten Bauteil 30 angeordnet ist, welche abgedichtet miteinander verbunden sind. Ein drittes Bauteil 31, das wiederum mit dem zweiten Bauteil 30 verbunden ist, ist zur Befestigung an der Montagefläche der Fahrzeugkarosserie 9 vorgesehen und erlaubt ein einfaches Herausführen eines Anschlusskabels 32 des Schaltventils 26.

Wie Fig. 5 zu entnehmen ist, sind das erste und das zweite Bauteil 29,39 mittels einer Gewindeverbindung miteinander abgedichtet verbunden, wobei diese Verbindung auch mittels anderen Verbindungsarten erfolgen kann.

### Bezugszeichenliste

- 1: Luftfeder
- 2: Luftfederabrollkolben
- 3: Luftfederdeckel
- 4: Luftfederbalg
- 5: Arbeitsraum
- 6: Rollfalte
- 7: Falte
- 8: Elastomerelement
- 9: Fahrzeugkarosserie
- 10: Querlenker
- 11: Erstes Kolbenteil
- 12: Zweites Kolbenteil
- 13: Klemmelement
- 14: Luftfederabrollkolben
- 15: Erstes Kolbenteil
- 16: Zweites Kolbenteil
- 17: Erstes Bauteil
- 18: Zweites Bauteil
- 19: Absatz
- 20: Ausnehmung
- 21: Elastomerelement
- 22: Ringelement
- 23: Ringelement
- 24: Luftfederabrollkolben
- 25: Arbeitsraum
- 26: Schaltventil
- 27: Erstes Kolbenteil
- 28: Zweites Kolbenteil
- 29: Erstes Bauteil
- 30: Zweites Bauteil
- 31: Drittes Bauteil
- 32: Anschlusskabel

## Patentansprüche

1. Luftfeder (1) für Fahrzeuge mit einem zwischen einem Luftfederdeckel (3) und einem Luftfederabrollkolben (2,14,24) luftdicht eingespannten Luftfederbalg (4) aus elastomerem Material, welcher mit dem Luftfederdeckel (3) und dem Luftfederabrollkolben (2, 14, 24) einen mit Druckluft gefüllten Arbeitsraum (5) begrenzt und der unter Ausbildung einer Rollfalte (6) am Luftfederabrollkolben (2,14,24) abrollt und unter Ausbildung einer zweiten Falte (7) am Luftfederdeckel (3) befestigt ist, sowie mit einem Elastomerelement (8,21), welches als Anti-Rauhigkeitslager vorgesehen ist, wobei das Elastomerelement (8, 21) zwischen einem ersten Kolbenteil (11, 15, 27) und einem dazu koaxialen zweiten Kolbenteil (12,16,28) des Luftfederabrollkolben (2, 14, 24) angeordnet ist, wobei an dem ersten Kolbenteil (11, 15, 27) die Abrollfläche für den Luftfederbalg (4) vorgesehen und der Luftfederbalg (4) mittels eines Klemmelements (13) befestigt ist, wobei das zweite Kolbenteil (12,16,28) an einer Montagefläche einer Fahrzeugkarosserie (9) montierbar ist, wobei das Elastomerelement (8) aus Gummi und zwischen den beiden Kolbenteilen (11,12) vulkanisiert vorgesehen ist, **dadurch gekennzeichnet, dass** das erste Kolbenteil (15) zweiteilig mit einem ersten und einem zweiten Bauteil (17,18) ausgebildet ist, wobei das erste Bauteil (17) zur Befestigung des Luftfederbalges (4) vorgesehen und an dem zweiten Bauteil (18) die Abrollfläche angeordnet ist.

2. Luftfeder nach Anspruch 1, **dadurch gekennzeichnet, dass** das das zweite Bauteil (18) einen radial nach innen gerichteten Absatz (19) aufweist, welcher zur Befestigung auf dem ersten Bauteil (17) in eine Ausnehmung (20) auf einer Außenseite des ersten Bauteils (17) eingreift.

3. Luftfeder nach Anspruch 1 oder 2, **dadurch gekennzeichnet, dass** das Elastomerelement (21) aus Gummi und zwischen zwei Ringelementen (22,23) vulkanisiert vorgesehen ist, welche zwischen dem zweiten Kolbenteil (16) und dem ersten Bauteil (17) des ersten Kolbenteiles (15) angeordnet sind.

4. Luftfeder nach Anspruch 1, mit wenigstens einem weiteren Arbeitsraum (25), welcher mittels einer Trennwand und eines Schaltventils (26) von dem Arbeitsraum (5) abgetrennt vorgesehen ist, **dadurch gekennzeichnet, dass** das zweite Kolbenteil (28) dreiteilig ausgebildet ist, wobei das Schaltventil (26) zwischen einem ersten, als Trennwand vorgesehenes Bauteil (29) und einem zweiten Bauteil (30) angeordnet ist, welche abgedichtet miteinander verbunden sind, und wobei ein drittes Bauteil (31), welches mit dem zweiten Bauteil (30) verbunden ist, zur Befestigung an der Montagefläche der Fahrzeugkarosserie (9) vorgesehen ist.

5. Luftfeder nach Anspruch 4, **dadurch gekennzeichnet, dass** das das erste und das zweite Bauteil (29,30) mittels einer Gewindeverbindung miteinander abgedichtet verbunden sind.

## Claims

1. Air spring (1) for vehicles, having an air spring bellows (4) made of elastomeric material clamped in an airtight manner between an air spring cover (3) and an air spring rolling piston (2, 14, 24), which air spring bellows (4) delimits with the air spring cover (3) and the air spring rolling piston (2, 14, 24) a working chamber (5) filled with compressed air, rolls on the air spring rolling piston (2, 14, 24) while forming a rolling fold (6) and is fastened to the air spring cover (3) while forming a second fold (7), and having an elastomeric element (8, 21) which is provided as an anti-harshness mount, the elastomeric element (8, 21) being arranged between a first piston part (11, 15, 27) and a second piston part (12, 16, 28), coaxial therewith, of the air spring rolling piston (2, 14, 24), the rolling surface for the air spring bellows (4) being provided on the first piston part (11, 15, 27) and the air spring bellows (4) being fastened by means of a clamping element (13), the second piston part (12, 16, 28) being mountable on a mounting surface of a vehicle body (9), the elastomeric element (8) being made of rubber and being vulcanized between the two piston parts (11, 12), **characterized in that** the first piston part (15) is formed in two parts with a first and a second component (17, 18), the first component (17) being provided for fastening the air spring bellows (4) and the rolling surface being arranged on the second component (18).

2. Air spring according to Claim 1, **characterized in that** the second component (18) has a radially inwardly oriented step (19) which, for fastening to the first component (17), engages in a recess (20) on an outer side of the first component (17).

3. Air spring according to Claim 1 or 2, **characterized in that** the elastomeric element (21) is made of rubber and is vulcanized between two annular elements (22, 23) which are arranged between the second piston part (16) and the first component (17) of the first piston part (15).

4. Air spring according to Claim 1, having at least one further working chamber (25) which is separated from the working chamber (5) by means of a dividing wall and an on-off valve (26), **characterized in that** the second piston part (28) is formed in three parts, the on-off valve (26) being arranged between a first component (29) provided as the dividing wall and a second component (30), which components (29, 30) are connected to one another in a sealed manner, and a third component (31) connected to the second component (30) being provided for fastening to the mounting surface of the vehicle body (9).

5. Air spring according to Claim 4, **characterized in that** the first and second components (29, 30) are connected to one another in a sealed manner by means of a threaded connection.

## Revendications

1. Ressort pneumatique (1) pour véhicules, comprenant un soufflet de ressort pneumatique (4) serré de manière étanche à l'air entre un couvercle de ressort pneumatique (3) et un piston de déroulage de ressort pneumatique (2, 14, 24) en matériau élastomère, qui limite avec le couvercle de ressort pneumatique (3) et le piston de déroulage de ressort pneumatique (2, 14, 24) un espace de travail (5) rempli d'air comprimé et qui roule sur le piston de déroulage de ressort pneumatique (2, 14, 24) en créant un pli de roulement (6) et qui est fixé au couvercle de ressort pneumatique (3) en formant un deuxième pli (7), et comprenant un élément en élastomère (8, 21) qui est prévu en tant que support anti-rugosité, l'élément en élastomère (8, 21) étant disposé entre une première partie de piston (11, 15, 27) et une deuxième partie de piston (12, 16, 28), coaxiale par rapport à celle-ci, du piston de déroulage de ressort pneumatique (2, 14, 24), la surface de déroulage pour le soufflet de ressort pneumatique (4) étant prévue au niveau de la première partie de piston (11, 15, 27) et le soufflet de ressort pneumatique (4) étant fixé au moyen d'un élément de serrage (13), la deuxième partie de piston (12, 16, 28) pouvant être monté sur une surface de montage d'une carrosserie de véhicule (9), l'élément en élastomère (8) étant réalisé en caoutchouc et étant prévu sous forme vulcanisée entre les deux parties de piston (11, 12),
**caractérisé en ce que**
la première partie de piston (15) est réalisée en deux parties avec un premier et un deuxième composant (17, 18), le premier composant (17) étant prévu pour la fixation du soufflet de ressort pneumatique (4) et la surface de déroulage étant disposée sur le deuxième composant (18).

2. Ressort pneumatique selon la revendication 1, **caractérisé en ce que** le deuxième composant (18) présente un épaulement (19) orienté radialement vers l'intérieur, qui, pour la fixation sur le premier composant (17), vient en prise dans un évidement (20) sur un côté extérieur du premier composant (17).

3. Ressort pneumatique selon la revendication 1 ou 2, **caractérisé en ce que** l'élément en élastomère (21) est réalisé en caoutchouc et est prévu sous forme vulcanisée entre deux éléments annulaires (22, 23), lesquels sont disposés entre la deuxième partie de piston (16) et le premier composant (17) de la première partie de piston (15) .

4. Ressort pneumatique selon la revendication 1, comprenant au moins un espace de travail supplémentaire (25) qui est prévu de manière séparée de l'espace de travail (5) au moyen d'une paroi de séparation et d'une soupape de commutation (26), **caractérisé en ce que** la deuxième partie de piston (28) est réalisée en trois parties, la soupape de commutation (26) étant disposée entre un premier composant (29) prévu en tant que paroi de séparation et un deuxième composant (30), lesquels sont connectés de manière étanche l'un à l'autre, et un troisième composant (31), qui est connecté au deuxième composant (30), étant prévu pour la fixation à la surface de montage de la carrosserie de véhicule (9).

5. Ressort pneumatique selon la revendication 4, **caractérisé en ce que** le premier et le deuxième composant (29, 30) sont connectés de manière étanche l'un à l'autre au moyen d'une connexion filetée.
